# FASCICULE DE BREVET EUROPEEN

(11) **EP 3 665 376 B1**
(45) Date de publication et mention de la délivrance du brevet: **18.05.2022**
(21) Numéro de dépôt: 18758938.7
(22) Date de dépôt: 26.07.2018
(51) Int. Cl.: F02C 6/08, F02C 7/18, F02C 9/18

(54) **UNITÉ DE COMMANDE D'UNE VANNE COMMANDÉE DE PRÉLÈVEMENT D'UN FLUX D'AIR DANS UN FLUX D'AIR SOUS PRESSION D'UN AÉRONEF**
EINHEIT ZUR STEUERUNG EINES GESTEUERTEN VENTILS ZUR ENTNAHME EINES LUFTSTROMS AUS EINEM DRUCKLUFTSTROM EINES FLUGZEUGES
UNIT FOR CONTROLLING A CONTROLLED VALVE FOR ABSTRACTING AN AIRFLOW FROM A PRESSURIZED AIRFLOW OF AN AIRCRAFT

(30) Priorité: 11.08.2017 FR 1757654
(43) Date de publication de la demande: 17.06.2020
(73) Titulaire: Safran Aircraft Engines, 75015 Paris (FR)
(72) Inventeur: DJELASSI, Cedrik, 77550 Moissy-Cramayel (FR)
(74) Mandataire: Cabinet Beau de Loménie
(86) Numéro de dépôt international: PCT/FR2018/051918
(87) Numéro de publication internationale: WO 2019/030441

(56) Documents cités:
- EP-A1- 0 511 935
- FR-A1- 2 978 123

## Description

### Arrière-plan de l'invention

L'invention se rapporte au domaine général des turbomachines pour moteurs aéronautiques à turbine à gaz. Elle concerne plus particulièrement la régulation de la température d'alimentation d'un système de prélèvement d'air pour un aéronef.

Un aéronef, comme par exemple un avion, comprend un fuselage dans lequel sont aménagés une cabine de pilotage et une cabine de passagers, et au moins une turbomachine. Une telle turbomachine comprend un moteur et une soufflante au niveau desquels peuvent être effectués des prélèvements d'air. De tels prélèvements sont réalisés par un système, dit de prélèvement d'air, également dénommé « bleed system » en anglais, comprenant une pluralité de vannes et un échangeur thermique. Ces vannes permettent le prélèvement d'air dans divers flux d'air circulant dans le moteur, notamment un flux d'air à haute pression, à température élevée, prélevé dans un flux d'air sous pression à partir d'au moins un étage compresseur du moteur, et un flux d'air de soufflante, froid, prélevé en aval de la soufflante par exemple dans une veine secondaire où circule un flux d'air froid. Le flux d'air à haute pression et le flux d'air de soufflante peuvent être délivrés à l'échangeur thermique pour permettre d'abaisser la température du flux d'air haute pression en sortie de l'échangeur de sorte à réguler la température de l'air envoyé au système avion. Une autre partie de l'air prélevé peut être utilisé pour alimenter les systèmes de dégivrage de l'avion.

Une telle régulation est obtenue par le contrôle de l'ouverture d'une ou plusieurs des vannes de prélèvement du flux d'air. La température du flux d'air peut être régulée par la sélection d'une ou plusieurs vannes à contrôler, par exemple, par le contrôle de l'ouverture ou de la fermeture de la vanne de prélèvement du flux d'air de soufflante.

Un flux d'air peut également être prélevé pour un système LPTACC (« Low pressure Turbine Active Clearance Control » en anglais) pour réguler le jeu entre, d'une part, les sommets d'aubes mobiles d'un rotor de turbine et, d'autre part, un anneau de turbine d'un carter externe entourant les aubes. Le jeu existant entre le sommet des aubes d'une turbine et l'anneau qui les entoure est dépendant des différences de variations dimensionnelles entre les parties tournantes telles que le disque et les aubes formant le rotor de turbine et les parties fixes telle que le carter externe dont l'anneau de turbine qu'il comprend. Certaines des variations dimensionnelles sont liées aux variations de température des aubes, du disque et du carter, et d'autres sont liées à l'effet mécanique de la force centrifuge s'exerçant sur le rotor de turbine. Or, pour augmenter la performance d'une turbine, il est souhaitable de minimiser le jeu autant que possible. Lors d'une augmentation de régime, par exemple lors du passage d'un régime de ralenti au sol à un régime de décollage dans une turbomachine pour moteur aéronautique, la force centrifuge s'exerçant sur le rotor de turbine tend à rapprocher les sommets d'aubes de l'anneau de turbine avant que l'anneau de turbine n'ait eu le temps de se dilater sous l'effet de l'augmentation de température liée à l'augmentation de régime ce qui génère un risque de contact.

Pour réguler le jeu, il est connu de recourir à un système de pilotage actif utilisant l'émission d'un flux d'air, prélevé par exemple au niveau d'un compresseur et/ou en aval de la soufflante de la turbomachine, sur la surface externe de l'anneau de turbine. De l'air frais envoyé sur la surface externe de l'anneau de turbine a pour effet de refroidir ce dernier et ainsi de limiter sa dilatation thermique ce qui permet de minimiser le jeu, et inversement, de l'air chaud favorise la dilatation thermique de l'anneau de turbine, ce qui augmente le jeu et permet par exemple d'éviter un contact entre les sommets d'aubes et l'anneau.

La régulation est réalisée à l'aide d'une unité de commande qui agit sur une vanne à position régulée pour commander le débit et/ou la température de l'air dirigé sur l'anneau de turbine, en fonction d'une consigne de jeu et d'une estimation du jeu de sommet d'aubes réel.

Un flux d'air peut également être prélevé pour un système de refroidissement de compartiment central inter-veines, ou « core compartment cooling system » en anglais, d'un réacteur à double flux. Le système comprend des vannes prélevant de l'air de refroidissement dans le flux d'air en sortie de la soufflante et un collecteur de refroidissement pour assurer le refroidissement des organes de commande et accessoires situés dans un logement central de la turbomachine, entre la veine primaire et la veine secondaire.

Généralement, l'air froid alimentant l'échangeur est prélevé dans le flux secondaire en aval de la soufflante, via une écope-vanne à section d'entrée variable désigné par l'abréviation FAV pour Fan Air Valve en anglais.

C'est le pilotage de la position angulaire d'un obturateur de cette vanne, formé par exemple par un ou deux volets pivotants, qui permet de régler le débit d'air froid prélevé par la FAV pour l'échangeur et donc permet la régulation thermique de l'air délivré à l'avion en sortie de l'échangeur, la température étant généralement désigné par l'expression « température bleed » pour les systèmes de régulation dits « bleed system » en anglais.

Dans l'exemple considéré, le système FAV est constitué d'un système de deux volets reliés mécaniquement à un vérin pneumatique qui permet d'ouvrir ou fermer ces volets. Le vérin est alimenté en air par un moteur couple qui vient mettre en pression une chambre d'alimentation. Le moteur couple étant alimenté par une pression dite « de muscle » régulée.

La régulation réalisée à l'aide de cette vanne FAV pose cependant des problèmes qui proviennent de la vanne en elle-même, notamment dans le cas où un tel système FAV ne possède pas de retour de position des volets permettant de connaitre la position des volets. D'autre part, la dispersion liée à la fabrication et celle liée aux conditions environnementales génèrent une variabilité importante de la loi reliant le courant de commande envoyé au moteur couple et la position des volets.

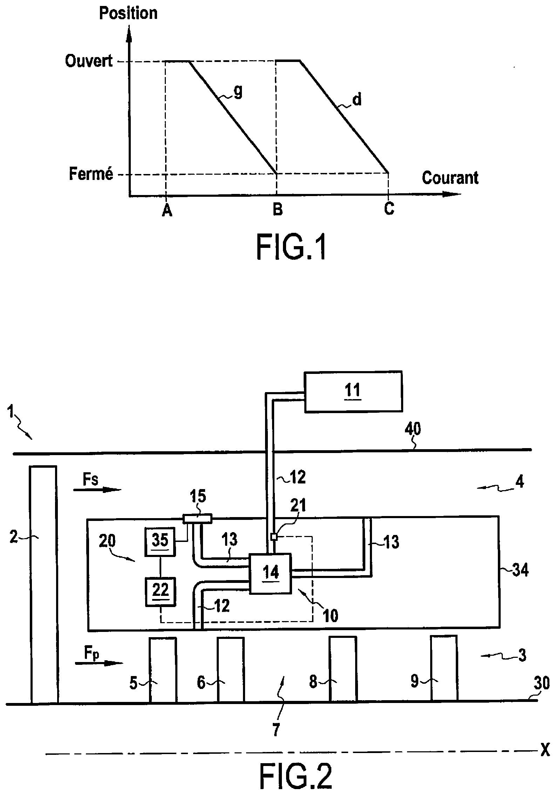

La relation entre le courant de commande des volets et la position des volets de l'écope-vanne présente donc une variabilité importante qui peut être illustrée par la Figure 1 qui présente un graphique exprimant la position des volets en fonction du courant de commande.

Sur le graphique de la figure 1, pour un courant présentant une valeur, en milliampères, correspondant à l'abscisse B les volets peuvent être fermés ou ouverts selon la variation de la loi comme cela est illustré par la caractéristique gauche de la vanne et la caractéristique droite du graphique. Autrement dit, la valeur du courant de commande à envoyer pour que les volets de l'écope-vanne soient fermés peut varier, ou glisser, de la valeur correspondant à l'abscisse B à la valeur correspondant à l'abscisse du point C.

En effet, comme cela est illustré sur la figure 1, le courant pour fermer la vanne (B mA) dans la caractéristique extrême gauche de la vanne correspond à une valeur pour laquelle les volets sont ouverts dans la caractéristique extrême droite.

La problématique de contrôle du courant de commande à envoyer provient donc directement de cette particularité. En effet, tout correcteur possédant un intégrateur se verra contraint de subir les plages mortes de courant.

Par exemple, dans le cas d'un contrôleur subissant une vanne ayant une caractéristique telle que celle de gauche sur le graphique de la figure 1, en partant d'un courant de commande correspondant au courant maximal, c'est-à-dire avec une valeur correspondant à celle de l'abscisse C, avec ainsi un régulateur en saturation de commande, l'écope-vanne est fermée selon la loi de commande. Si l'ouverture de l'écope-vanne est nécessaire pour réguler la température de l'air pour le « bleed system », le dispositif de commande devra atteindre un courant présentant une valeur correspondant à l'abscisse B pour commencer à voir la vanne bouger. Les gains du correcteur ne peuvent pas être adaptés à la position de la vanne, car cette position est inconnue, ce qui conduit à traverser très lentement la zone morte de l'écope-vanne. Ceci implique un temps de réponse très lent de la régulation.

Les régulateurs préconisés dans l'état de la technique pour ce type de contrôle sont généralement des correcteurs de type PID, c'est-à-dire proportionnel intégral dérivé.

Il est connu du document FR 2978123 un système de gestion du prélèvement d'air pour le système « bleed » avec une commande d'une écope-vanne FAV. Le système décrit dans ce document présente une gestion particulière des informations de température fournies par des sondes mais ne présente pas de régulation.

Il est également connu un dispositif de commande, ou contrôleur, à régulateur linéaire quadratique pour la commande d'une FAV comprenant un actionneur. Le contrôleur envoie à l'actionneur des signaux de commande de position, mais ne prend pas en compte la variabilité d'une loi de commande du signal en fonction de la position des volets du FAV.

### Objet et résumé de l'invention

L'invention vise à pallier les inconvénients mentionnés ci-dessus notamment la variabilité de la loi de commande reliant le courant de commande à délivrer à la position des volets de la vanne commandée, la variabilité de la loi de commande générant des plages mortes de commande, en fournissant une unité de commande de régulation de la température du flux prélevé permettant de compenser la plage morte de courant de commande de la loi de commande de la vanne commandée.

Un objet de l'invention propose un système de régulation d'un paramètre thermique associé à un ensemble d'échange thermique d'une turbomachine, comprenant :
- au moins un moyen de mesure ou d'estimation dudit paramètre thermique,
- une vanne commandée par un système de commande au moins en partie électrique, la vanne comportant un obturateur, formé par exemple par au moins un volet, ledit obturateur étant configuré pour faire varier le débit de passage d'un fluide dans ledit ensemble d'échange thermique afin d'influer sur ledit paramètre thermique, et
- un régulateur comprenant un comparateur configuré pour déterminer le signe positif ou négatif d'un signal d'erreur relatif à la différence entre une valeur du paramètre thermique mesuré ou estimé par ledit moyen et une consigne.

Selon une caractéristique générale de l'invention, le régulateur comprend en outre :
- un commutateur couplé en sortie du comparateur et configuré pour délivrer au système de commande de la vanne un courant de commande maximum ou un courant de commande minimum en fonction du signe positif ou négatif du signal d'erreur, le courant de commande maximum permettant de commuter l'obturateur de ladite vanne dans une première position définissant un état pleinement fermé de la vanne et le courant de commande minimum permettant de commuter l'obturateur de ladite vanne dans une seconde position définissant un état pleinement ouvert de la vanne, et
- un déphaseur configuré pour appliquer sur le signal d'erreur une avance de phase déterminée en fonction d'une estimation d'une constante de temps du système de commande de la vanne.

Le système de commande de la vanne peut être un système électro-pneumatique comme ceux décrits dans le document FR 2 774 357. Le système de commande peut ainsi être un moteur couple de la vanne qui actionne le vérin permettant de modifier la position des volets dans le cas où l'obturateur est formé par au moins deux volets. Le système de commande et la vanne peuvent être intégrés dans un même bloc.

Le régulateur du système de régulation est ainsi configuré pour fonctionner en tout ou rien. L'utilisation d'un régulateur de type tout ou rien avec une avance de phase permet des performances idéales pour un système de prélèvement d'air pour aéronef, ainsi qu'un réglage extrêmement simple.

Un régulateur de type tout-ou-rien seul utilisé dans une unité de commande pour la régulation de la température de l'air délivré en sortie d'un système de prélèvement dans un aéronef présenterait l'inconvénient majeur de conduire à un dépassement potentiellement important de la consigne de température. En effet, avec un régulateur de type tout-ou-rien pour commander la vanne, la commande ne s'inverse que lorsque la température de consigne est égalée ou dépassée. Le temps de réponse du système de prélèvement, notamment de la vanne, peut ainsi engendrer un dépassement important, au-delà de la température de consigne, de la température de l'air délivré à l'avion en sortie de l'échangeur, c'est-à-dire la température à réguler qui est mesurée ou estimée par un moyen approprié.

L'avance de phase de type (1+τρ), avec τ une constante de temps d'un système et p le signal, appliquée sur le signal alimentant le comparateur de l'unité de commande, c'est-à-dire sur le signal résultant de la différence entre la température de consigne et la température mesurée, permet de pallier à ce problème.

L'avance de phase est déterminée en déterminant une dérivée de la température, c'est-à-dire un gradient de température, et en appliquant ce gradient à la valeur de la différence de température existant entre la température mesurée et la température de consigne. Ainsi il est possible d'anticiper l'instant auquel la température de consigne risque d'être dépassée par la température réelle (mesurée ou estimée) et de commander la commutation du courant de commande en avance, c'est-à-dire avant que la température réelle n'ait dépassée la température de consigne.

Si la constante de temps du système de commande de la vanne est estimable en temps réel, celle-ci peut être utilisée directement comme la constante de temps dans l'avance de phase pour ajuster l'avance de temps en fonction des paramètres de fonctionnement de la turbomachine.

Selon un mode de réalisation, le moyen de mesure ou d'estimation du paramètre thermique peut être un capteur de température configuré pour mesurer la température de l'air délivré en sortie d'un échangeur thermique de l'ensemble d'échange thermique.

Selon un premier aspect du système de régulation, le déphaseur peut comprendre un dérivateur configuré pour fournir une dérivée temporelle du signal d'erreur, l'avance de phase appliquée sur le signal d'erreur à un instant donné étant calculée en multipliant la constante de temps par la dérivée temporelle à cet instant.

Selon un deuxième aspect du système de régulation, le déphaseur peut comprendre un amplificateur configuré pour appliquer à la constante de temps dudit système de commande de la vanne un gain de réglage positif et inférieur ou égal à un.

La constante de temps de la vanne est appliquée modulo une constante de réglage appelée gain de réglage. Le gain de réglage permet d'ajuster l'avance de phase en fonction de la correction souhaitée par l'unité de commande. Un gain de 1 permet une avance de phase maximale, ce qui fait commuter régulièrement la commande de courant. Un gain inférieur à 1 permet de limiter la fréquence de commutation de la commande et ainsi d'allonger la durée de vie de la vanne.

De préférence, le gain de réglage est compris entre 0,4 et 0,6.

Selon un troisième aspect du système de régulation, le système de commande de la vanne comprend un clapet actionné par un moteur électrique, ainsi que des moyens de commande pneumatique commandés par le clapet et aptes à actionner l'ouverture et la fermeture de la vanne.

Selon un quatrième aspect du système de régulation, le fluide alimentant ledit ensemble d'échange thermique est de l'air prélevé en aval d'une soufflante de la turbomachine et est destiné à refroidir l'ensemble d'échange thermique.

Selon un cinquième aspect du système de régulation, l'ensemble d'échange thermique peut comporter :
- une première conduite prélevant un premier flux d'air sous pression en aval d'un étage de compression de la turbomachine,
- une seconde conduite prélevant un second flux d'air formé par ledit air prélevé en aval de la soufflante, la température du second flux d'air prélevé étant inférieure à la température du premier flux d'air prélevé,
- un échangeur thermique auquel sont reliées lesdites première et seconde conduites, ledit échangeur thermique étant apte à abaisser la température du premier flux d'air en sortie de l'échangeur par échange thermique avec le second flux d'air,
le système de régulation comprenant un capteur de température adapté pour mesurer ledit paramètre thermique, le paramètre thermique correspondant à la température du premier flux d'air dans la première conduite en sortie de l'échangeur thermique,
ladite vanne étant couplée à la seconde conduite de façon à faire varier le débit du second flux d'air afin de réguler ladite température du premier flux d'air dans la première conduite en sortie de l'échangeur thermique.

Dans une variante du système régulation, l'ensemble d'échange thermique peut comprendre :
- au moins une conduite de prélèvement dudit fluide, le fluide comportant de l'air prélevé en aval d'une soufflante de la turbomachine et/ou en aval d'un étage de compression de la turbomachine, et
- un anneau de turbine présentant une surface externe apte à être ventilée par ledit air prélevé de façon à modifier la température dudit anneau,
ladite vanne étant agencée de façon à faire varier le débit d'air prélevé, afin de piloter un jeu de sommets d'aubes de la turbine par une régulation du paramètre thermique consistant en l'état de dilatation de l'anneau de turbine.

Dans un autre objet, il est proposé un procédé de régulation d'un paramètre thermique associé à un ensemble d'échange thermique d'une turbomachine, le procédé étant destiné à être mis en œuvre dans un système de régulation qui comprend au moins un moyen de mesure ou d'estimation dudit paramètre thermique, une vanne commandée par un système de commande au moins en partie électrique, la vanne comportant un obturateur configuré pour faire varier le débit de passage d'un fluide dans ledit ensemble d'échange thermique afin d'influer sur ledit paramètre thermique.

Selon une caractéristique générale de cet objet, le procédé comprend :
- une étape de comparaison dans laquelle on détermine le signe positif ou négatif d'un signal d'erreur relatif à la différence entre une valeur du paramètre thermique mesuré ou estimé par dit moyen et une consigne,
- une étape de commutation de courant de commande dans laquelle on délivre au système de commande de la vanne un courant de commande maximum ou un courant de commande minimum en fonction du signe positif ou négatif du signal d'erreur, le courant de commande maximum permettant de commuter l'obturateur de ladite vanne dans une première position définissant un état pleinement fermé de la vanne et le courant de commande minimum permettant de commuter l'obturateur de ladite vanne dans une seconde position définissant un état pleinement ouvert de la vanne, et
- une étape de déphasage dans laquelle on applique sur le signal d'erreur une avance de phase déterminée en fonction d'une estimation d'une constante de temps du système de commande de la vanne, l'étape de déphasage précédant l'étape de comparaison.

Selon un premier aspect du procédé de régulation, l'étape de déphasage peut comprendre une sous-étape de dérivation dans laquelle on calcule une dérivée temporelle du signal d'erreur, l'avance de phase appliquée sur le signal d'erreur à un instant donné étant calculée en multipliant la constante de temps par ladite dérivée temporelle à cet instant.

Selon un deuxième aspect du procédé de commande, l'étape de déphasage peut comprendre une sous-étape d'amplification dans laquelle on applique à la constante de temps dudit système de commande de la vanne un gain de réglage positif et inférieur ou égal à un.

De préférence, le gain de réglage est compris entre 0,4 et 0,6.

Dans un autre objet il est proposé une turbomachine d'un aéronef comprenant un système de régulation d'un paramètre thermique.

### Brève description des dessins.

L'invention sera mieux comprise à la lecture faite ci-après, à titre indicatif mais non limitatif, en référence aux dessins annexés sur lesquels :
- la figure 1, déjà présentée, un graphique exprimant la position des volets en fonction du courant de commande selon l'état de la technique ;
- la figure 2 présente schématiquement une turbomachine dotée d'un ensemble d'échange thermique selon un mode de réalisation de l'invention ;
- la figure 3 présente schématiquement une unité de commande selon un mode de réalisation de l'invention ;
- la figure 4 présente un logigramme d'un procédé de commande selon un mode de mise en œuvre de l'invention.

### Description détaillée de modes de réalisation

Sur la figure 2 est représenté schématiquement une turbomachine 1 d'un aéronef dotée d'un ensemble d'échange thermique selon un mode de réalisation de l'invention.

Le turboréacteur 1 est du type à double flux et double corps et présente un axe longitudinal X. Le turboréacteur comprend notamment une soufflante 2 qui délivre un flux d'air qui se divise en un flux primaire Fp s'écoulant dans une veine primaire 3 d'écoulement du flux primaire Fp et en un flux secondaire F_{S} s'écoulant dans une veine secondaire 4 d'écoulement du flux secondaire F_{S} coaxiale à la veine primaire 3. La veine primaire 3 s'étend entre une virole centrale 30 et un compartiment inter-veines 34, et la veine secondaire 4 s'étend entre le compartiment inter-veines 34 et une virole externe 40. D'amont en aval dans le sens d'écoulement du flux primaire F_{P}, la veine primaire 3 comprend un compresseur basse-pression 5, un compresseur haute-pression 6, une chambre de combustion 7, une turbine haute-pression 8 et une turbine basse-pression 9.

Le turboréacteur 1 comprend un ensemble d'échange thermique 10 monté dans le compartiment inter-veines 34. L'ensemble d'échange thermique 10 comprend un système de prélèvement d'un flux d'air chaud et d'un flux d'air froid, configuré pour refroidir l'air chaud avec l'air froid et fournir en sortie de l'ensemble d'échange thermique 10 un air refroidi régulé à une température et une pression souhaitées à destination d'installations 11 de l'aéronef et/ou de la turbomachine utilisant un tel air, telles que par exemple l'installation de conditionnement d'air de la cabine d'aéronef, l'installation de dégivrage des surfaces aérodynamiques de la turbomachine , etc.

L'ensemble d'échange thermique10 comprend une conduite de prélèvement d'air chaud 12, une conduite de prélèvement d'air froid 13, et un échangeur thermique 14.

La conduite de prélèvement d'air chaud 12 raccorde de manière fluidique la veine primaire 3, et plus particulièrement au niveau d'un étage de compression 5 ou 6, aux installations 11 via l'échangeur thermique 14. La conduite de prélèvement d'air chaud 12 prélève ainsi une portion du flux primaire Fₚ et l'achemine jusqu'aux installations 11 via l'échangeur thermique 14. La conduite de prélèvement d'air chaud 12 débouche dans la veine primaire 3 au niveau d'un étage de compression 5 ou 6 et relie ainsi ce dernier à l'entrée de l'échangeur thermique 14.

La conduite de prélèvement d'air froid 13 prélève une portion du flux secondaire F_{S} dans la veine secondaire 4 et, après avoir traversé l'échangeur thermique 14, délivre la portion d'air ainsi prélevée dans la veine secondaire en aval du lieu de prélèvement par rapport au sens du flux secondaire F_{S}. La conduite de prélèvement d'air froid 13 débouche une première fois dans la veine secondaire 4 pour prélever une portion du flux secondaire F_{S} et débouche une seconde fois dans la veine secondaire 4 pour réinjecter la portion de flux ainsi prélevée dans le flux secondaire F_{S} en aval du lieu de prélèvement après avoir été réchauffée lors de la traversée de l'échangeur thermique 4. La conduite de prélèvement d'air froid 13 met ainsi en communication la veine secondaire 4 recevant le flux secondaire F_{S} délivré par la soufflante 2 avec l'échangeur thermique 14.

L'échangeur thermique 14 est ainsi parcouru transversalement par l'air froid venant de la soufflante 2 pour refroidir l'air chaud prélevé dans l'étage compresseur 4 et circulant dans l'échangeur 14 depuis son entrée jusqu'à sa sortie. L'air chaud circulant dans la conduite de prélèvement d'air chaud 12 et l'air froid circulant dans la conduite de prélèvement d'air froid 13 restent dans des conduites distinctes au sein de l'échangeur thermique 14 et ne se mélangent jamais.

Pour prélever le flux d'air froid dans la veine secondaire 4, l'ensemble d'échange thermique 10 comprend une vanne commandée 15 de type écope-vanne montée sur la prise d'air prévue dans le compartiment inter-veines 34. La vanne 15 comprend des volets mécaniques actionnés par un vérin commandé par système de commande 35 comportant un moteur couple.

La vanne 15, et plus particulièrement le moteur couple 35 de la vanne 15, est commandée par une unité de commande 20.

L'unité de commande 20 comprend un capteur de température 21 monté dans la conduite de prélèvement d'air chaud 12 sur une portion de la conduite s'étendant entre l'échangeur thermique 14 et les installations 11, et un régulateur 22 de la température du flux d'air délivré en sortie de l'échangeur thermique 14 .

Le capteur de température 21 est configuré pour mesurer la température du flux d'air délivré aux installations 11, c'est-à-dire la température du flux d'air chaud circulant dans la conduite de prélèvement d'air chaud 12 en sortie de l'échangeur thermique 14.

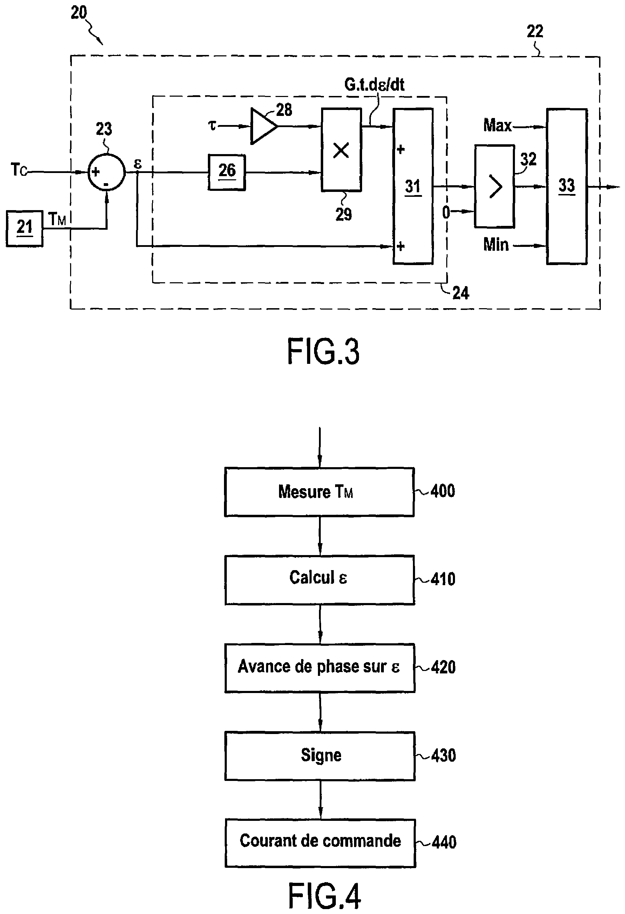

Comme cela est illustré schématiquement sur la figure 3, le régulateur 22 est de type tout-ou-rien et comprend un soustracteur 23 recevant en entrée une consigne de température T_{C} et une mesure de la température réelle T_{M} délivrée par le capteur de température 21. Le soustracteur 23 est configuré pour déterminer l'erreur ε, c'est-à-dire la différence, entre la température de consigne T_{C} et la température mesurée T_{M}.

Le régulateur 22 comprend en outre un module d'avance de phase, ou déphaseur 24, comportant un bloc de dérivation 26, un amplificateur 28, un multiplicateur 29 et un additionneur 31.

Le bloc de dérivation 26, ou dérivateur, calcule à partir du signal d'erreur ε délivré par le soustracteur 23 la dérivée temporelle du signal d'erreur dε/dt. Le dérivateur 26 délivre la dérivée temporelle du signal d'erreur dε/dt au multiplicateur 29

L'amplificateur 28 reçoit en entrée une constante de temps correspondant à la constante de temps τ du moteur couple 35 de la vanne 15 commandée. L'amplificateur 28 applique un gain de réglage positif G inférieur ou égale à un à la constante de temps τ reçue en entrée et délivre en sortie un signal correspondant à la multiplication de la constante de temps τ avec le gain G et avec la dérivée temporelle du signal d'erreur dε/dt.

Le gain de réglage permet d'ajuster l'avance de phase. Un gain de 1 permet une avance de phase maximale pour ce type de régulateur 22, ce qui fera cycler beaucoup la commande. Un gain inférieur à 1 permet de limiter la fréquence de cycle et allonge ainsi la durée de vie de la vanne 15. Un gain de 0,5 apporte un bon compromis entre performance de régulation et fréquence de cycle de la commande.

L'additionneur 31 reçoit en entrée le signal délivré par le multiplicateur 29 et le signal d'erreur ε délivré par le soustracteur 23, et fournit ainsi en sortie un signal d'erreur avec une avance de phase.

Le régulateur 22 comprend en outre un comparateur 32 et un commutateur 33. Le signal résultant de l'additionneur 31 est envoyé au comparateur 32 qui détermine le signe du signal résultant délivré par l'additionneur 31 du déphaseur 24. Le signe est alors délivré en sortie du comparateur 32 au commutateur 33 configuré pour délivrer en sortie une valeur de courant de commande du moteur couple 35 de la vanne 15 pouvant commuter entre une première valeur correspondant à un courant minimum Min et une seconde valeur correspondant à un courant maximum Max.

La turbine haute-pression 8 du turboréacteur 1 comprend un rotor formé d'un disque sur lequel sont montées une pluralité d'aubes mobiles disposées dans la veine primaire 3. Le rotor est entouré par un carter de turbine comprenant un anneau de turbine porté par un carter externe de turbine par l'intermédiaire d'entretoises de fixation.

L'anneau de turbine peut être formé d'une pluralité de secteurs ou segments adjacents. Du côté interne, il est muni d'une couche de matériau abradable et entoure les aubes du rotor en ménageant avec les sommets de celles-ci un jeu.

Le turboréacteur 1 peut comprendre en outre un système secondaire de prélèvement d'air, similaire à l'ensemble d'échange thermique 10 et non représenté sur la figure 2, permettant de piloter le jeu en modifiant de manière commandée, le diamètre interne du carter externe de turbine. A cet effet, une unité de commande, similaire à l'unité de commande 20 de l'ensemble d'échange thermique 10, contrôle le débit d'air prélevé afin de faire varier la température de l'air dirigé vers le carter externe de turbine et ainsi piloter un jeu de sommets d'aubes de la turbine par une régulation du paramètre thermique consistant en l'état de dilatation de l'anneau de turbine.

Sur la figure 4 est illustré un logigramme d'un procédé de commande d'une vanne commandée de prélèvement d'un flux d'air dans un flux d'air sous pression d'un aéronef selon un mode de mise en œuvre de l'invention.

Dans une première étape 400, le capteur de température 21 de l'unité de commande 20 réalise une mesure de la température T_{M} du flux gazeux circulant dans le conduit d'air chaud 12 en sortie de l'échangeur thermique 14.

Dans une étape suivante 410, le régulateur 22 de l'unité de commande 20 calcule la différence ε existant entre la température de consigne T_{C} et la température mesurée T_{M} à l'étape précédente 400.

Dans une étape suivante 420, le régulateur applique une avance de phase sur la différence ε calculée dans l'étape précédente 410.

Dans une étape suivante 430, le signe du signal relatif à l'erreur ε à laquelle a été appliquée l'avance de phase est déterminée par le comparateur 32 du régulateur 22.

Le signe déterminé à l'étape précédente 430 est ensuite délivré au commutateur 33 qui délivre en sortie un courant de commande dont la valeur correspond à une valeur maximale pour ouvrir les volets de la vanne 15 ou à une valeur minimale pour fermer les volets de la vanne 15.

L'invention permet de fournir une unité de commande de régulation de la température du flux prélevé permettant de compenser la plage morte de courant de commande de la loi de commande de la vanne commandée.

## Revendications

1. Système de régulation d'un paramètre thermique (T_{M}) associé à un ensemble d'échange thermique (10) d'une turbomachine (1), comprenant :
- au moins un moyen (21) de mesure ou d'estimation dudit paramètre thermique (T_{M}),
- une vanne (15) commandée par un système de commande (35) au moins en partie électrique, la vanne (15) comportant un obturateur par exemple formé par au moins un volet, ledit obturateur étant configuré pour faire varier le débit de passage d'un fluide dans ledit ensemble d'échange thermique (10) afin d'influer sur ledit paramètre thermique (T_{M}), et
- un régulateur (22) comprenant un comparateur (32) configuré pour déterminer le signe positif ou négatif d'un signal d'erreur (ε) relatif à la différence (ε) entre une valeur du paramètre thermique (T_{M}) mesuré ou estimé par ledit moyen (21) et une consigne (T_{C}),
**caractérisé en ce que** le régulateur (22) comprend en outre :
- un commutateur (33) couplé en sortie du comparateur (32) et configuré pour délivrer au système de commande (35) de la vanne (15) un courant de commande maximum (Max) ou un courant de commande minimum (Min) en fonction du signe positif ou négatif du signal d'erreur (ε), le courant de commande maximum (Max) permettant de commuter l'obturateur de ladite vanne (15) dans une première position définissant un état pleinement fermé de la vanne (15) et le courant de commande minimum (Min) permettant de commuter l'obturateur de ladite vanne (15) dans une seconde position définissant un état pleinement ouvert de la vanne (15), et
- un déphaseur (24) configuré pour appliquer sur le signal d'erreur (ε) une avance de phase déterminée en fonction d'une estimation d'une constante de temps (τ) du système de commande (35) de la vanne (15).

2. Système de régulation selon la revendication 1, dans lequel le déphaseur (24) comprend un dérivateur (26) configuré pour fournir une dérivée temporelle du signal d'erreur (ε), l'avance de phase appliquée sur le signal d'erreur (ε) à un instant donné étant calculée en multipliant la constante de temps (τ) par la dérivée temporelle à cet instant.

3. Système de régulation selon l'une des revendications 1 ou 2, dans lequel le déphaseur (24) comprend un amplificateur (28) configuré pour appliquer à la constante de temps (τ) dudit système de commande (35) de la vanne (15) un gain de réglage (G) positif et inférieur ou égal à un.

4. Système de régulation selon la revendication 3, dans lequel le gain de réglage (G) est compris entre 0,4 et 0,6.

5. Système de régulation selon l'une des revendications 1 à 4, dans lequel le système de commande (35) de la vanne (15) comprend un clapet actionné par un moteur électrique, ainsi que des moyens de commande pneumatique commandés par le clapet et aptes à actionner l'ouverture et la fermeture de la vanne (15).

6. Turbomachine (1) d'un aéronef, **caractérisée en ce qu'**elle comprend un système de régulation d'un paramètre thermique (T_{M}) selon l'une des revendications 1 à 5, et un ensemble d'échange thermique (10).

7. Turbomachine (1) selon la revendication 6, dans laquelle le fluide alimentant ledit ensemble d'échange thermique (10) dont le paramètre thermique (T_{M}) est régulé par ledit système de régulation est de l'air prélevé en aval d'une soufflante (2) de la turbomachine (1) et est destiné à refroidir l'ensemble d'échange thermique (10).

8. Turbomachine (1) selon la revendication 7, dans laquelle l'ensemble d'échange thermique (10) dont le paramètre thermique (T_{M}) est régulé par ledit système de régulation comporte :
- une première conduite (12) prélevant un premier flux d'air sous pression en aval d'un étage de compression (5) de la turbomachine,
- une seconde conduite (13) prélevant un second flux d'air formé par ledit air prélevé en aval de la soufflante (2), la température du second flux d'air prélevé étant inférieure à la température du premier flux d'air prélevé,
- un échangeur thermique (14) auquel sont reliées lesdites première et seconde conduites (12, 13), ledit échangeur thermique (14) étant apte à abaisser la température du premier flux d'air en sortie de l'échangeur par échange thermique avec le second flux d'air,
le système de régulation comprenant en outre un capteur de température (21) adapté pour mesurer ledit paramètre thermique, le paramètre thermique correspondant à la température (T_{M}) du premier flux d'air dans la première conduite (12) en sortie de l'échangeur thermique (14), et
ladite vanne (15) dudit système de régulation étant couplée à la seconde conduite (13) de façon à faire varier le débit du second flux d'air afin de réguler ladite température (T_{M}) du premier flux d'air dans la première conduite (12) en sortie de l'échangeur thermique (14).

9. Turbomachine (1) selon l'une des revendications 6 à 8, dans laquelle l'ensemble d'échange thermique comprend :
- au moins une conduite (12, 13) de prélèvement dudit fluide, le fluide comportant de l'air prélevé en aval d'une soufflante (2) de la turbomachine (1) et/ou en aval d'un étage de compression (5) de la turbomachine, et
- un anneau de turbine présentant une surface externe apte à être ventilée par ledit air prélevé de façon à modifier la température dudit anneau,
ladite vanne (15) étant agencée de façon à faire varier le débit d'air prélevé, afin de piloter un jeu de sommets d'aubes de la turbine par une régulation du paramètre thermique consistant en l'état de dilatation de l'anneau de turbine.

10. Procédé de régulation d'un paramètre thermique (T_{M}) associé à un ensemble d'échange thermique (10) d'une turbomachine (1), le procédé étant destiné à être mis en œuvre dans un système de régulation qui comprend au moins un moyen de mesure (21) ou d'estimation dudit paramètre thermique (T_{M}), une vanne (15) commandée par un système de commande (35) au moins en partie électrique, la vanne (15) comportant un obturateur configuré pour faire varier le débit de passage d'un fluide dans ledit ensemble d'échange thermique (10) afin d'influer sur ledit paramètre thermique (T_{M}),
le procédé comprenant:
- une étape de comparaison dans laquelle on détermine le signe positif ou négatif d'un signal d'erreur (ε) relatif à la différence (ε) entre une valeur du paramètre thermique (T_{M}) mesuré ou estimé par ledit moyen de mesure (21) ou d'estimation et une consigne (T_{C}),
**caractérisé en ce que** le procédé comprend:
- une étape de commutation de courant de commande dans laquelle on délivre au système de commande (35) de la vanne (15) un courant de commande maximum (Max) ou un courant de commande minimum (Min) en fonction du signe positif ou négatif du signal d'erreur (ε), le courant de commande maximum (Max) permettant de commuter l'obturateur de ladite vanne (15) dans une première position définissant un état pleinement fermé de la vanne (15) et le courant de commande minimum (Min) permettant de commuter l'obturateur de ladite vanne (15) dans une seconde position définissant un état pleinement ouvert de la vanne (15), et
- une étape de déphasage dans laquelle on applique sur le signal d'erreur (ε) une avance de phase déterminée en fonction d'une estimation d'une constante de temps (τ) du système de commande (35) de la vanne, l'étape de déphasage précédant l'étape de comparaison.

11. Procédé selon la revendication 10, dans lequel l'étape de déphasage comprend une sous-étape de dérivation (26) dans laquelle on calcule une dérivée temporelle du signal d'erreur (ε), l'avance de phase appliquée sur le signal d'erreur (ε) à un instant donné étant calculée en multipliant la constante de temps (τ) par ladite dérivée temporelle à cet instant.

12. Procédé selon l'une des revendications 10 ou 11, dans lequel l'étape de déphasage comprend une sous-étape d'amplification dans laquelle on applique à la constante de temps (τ) dudit système de commande (35) de la vanne (15) un gain de réglage (G) positif et inférieur ou égal à un.

## Patentansprüche

1. System zur Regelung eines thermischen Parameters (T_{M}), der mit einer Wärmeaustausch-Baugruppe (10) einer Turbomaschine (1) verbunden ist, das umfasst:
- mindestens ein Mittel (21) zur Messung oder zur Schätzung des thermischen Parameters (T_{M}),
- ein Ventil (15), das von einem zumindest teilweise elektrischen Steuersystem (35) gesteuert wird, wobei das Ventil (15) einen Verschluss umfasst, der zum Beispiel aus mindestens einer Klappe gebildet ist, wobei der Verschluss dazu ausgestaltet ist, die Veränderung der Durchströmungsmenge eines Fluids in der Wärmeaustausch-Baugruppe (10) zu bewirken, um den thermischen Parameter (T_{M}) zu beeinflussen, und
- einen Regler (22), der einen Komparator (32) umfasst, der dazu ausgestaltet ist, das positive oder negative Vorzeichen eines Fehlersignals (ε) in Bezug auf die Differenz (ε) zwischen einem durch das Mittel (21) gemessenen oder geschätzten Wert des thermischen Parameters (T_{M}) und einem Einstellwert (T_{C}) zu bestimmen,
**dadurch gekennzeichnet, dass** der Regler (22) ferner umfasst:
- einen Schalter (33), der an den Ausgang des Komparators (32) gekoppelt ist und dazu ausgestaltet ist, an das Steuersystem (35) des Ventils (15) in Abhängigkeit vom positiven oder negativen Vorzeichen des Fehlersignals (ε) einen Höchststeuerstrom (Max) oder einen Mindeststeuerstrom (Min) zu liefern, wobei der Höchststeuerstrom (Max) das Schalten des Verschlusses des Ventils (15) in eine erste Position ermöglicht, die einen vollständig geschlossenen Zustand des Ventils (15) definiert, und der Mindeststeuerstrom (Min) das Schalten des Verschlusses des Ventils (15) in eine zweite Position ermöglicht, die einen vollständig geöffneten Zustand des Ventils (15) definiert, und
- einen Phasenschieber (24) der dazu ausgestaltet ist, auf das Fehlersignal (ε) eine Phasenvoreilung anzuwenden, die in Abhängigkeit von einer Schätzung einer Zeitkonstanten (τ) des Steuersystems (35) des Ventils (15) bestimmt wird.

2. Regelungssystem nach Anspruch 1, wobei der Phasenschieber (24) einen Ableiter (26) umfasst, der dazu ausgestaltet ist, eine zeitliche Ableitung des Fehlersignals (ε) zu liefern, wobei die auf das Fehlersignal (ε) an einem gegebenen Zeitpunkt angewendete Phasenvoreilung durch Multiplizieren der Zeitkonstanten (τ) mit der zeitlichen Ableitung an diesem Zeitpunkt berechnet wird.

3. Regelungssystem nach einem der Ansprüche 1 oder 2, wobei der Phasenschieber (24) einen Verstärker (28) umfasst, der dazu ausgestaltet ist, auf die Zeitkonstante (τ) des Steuersystems (35) des Ventils (15) eine Regelungsverstärkung (G) anzuwenden, die positiv und kleiner oder gleich eins ist.

4. Regelungssystem nach Anspruch 3, wobei die Regelungsverstärkung (G) zwischen 0,4 und 0,6, beträgt.

5. Regelungssystem nach einem der Ansprüche 1 bis 4, wobei das Steuersystem (35) des Ventils (15) einen Schließkörper, der durch einen Elektromotor betätigt wird, sowie pneumatische Steuermittel umfasst, die von dem Schließkörper gesteuert werden und geeignet sind, das Öffnen und Schließen des Ventils (15) zu betätigen.

6. Turbomaschine (1) eines Luftfahrzeugs, **dadurch gekennzeichnet, dass** sie ein System zur Regelung eines thermischen Parameters (T_{M}) nach einem der Ansprüche 1 bis 5 und eine Wärmeaustausch-Baugruppe (10) umfasst.

7. Turbomaschine (1) nach Anspruch 6, wobei das Fluid, das die Wärmeaustausch-Baugruppe (10) versorgt, deren thermischer Parameter (T_{M}) durch das Regelungssystem geregelt wird, Luft ist, die stromabwärts eines Gebläses (2) der Turbomaschine (1) entnommen wird und dazu bestimmt ist, die Wärmeaustausch-Baugruppe (10) zu kühlen.

8. Turbomaschine (1) nach Anspruch 7, wobei die Wärmeaustausch-Baugruppe (10), deren thermischer Parameter (T_{M}) durch das Regelungssystem geregelt wird, umfasst:
- eine erste Leitung (12), die eine erste Luftströmung unter Druck stromabwärts einer Verdichtungsstufe (5) der Turbomaschine entnimmt,
- eine zweite Leitung (13), die eine zweite Luftströmung entnimmt, die von der stromabwärts des Gebläses (2) entnommenen Luft gebildet wird, wobei die Temperatur der zweiten entnommenen Luftströmung niedriger als die Temperatur der ersten entnommenen Luftströmung ist,
- einen Wärmetauscher (14), mit dem die erste und die zweite Leitung (12, 13) verbunden sind, wobei der Wärmetauscher (14) dazu geeignet ist, die Temperatur der ersten Luftströmung am Ausgang des Tauschers durch Wärmeaustausch mit der zweiten Luftströmung zu senken,
wobei das Regelungssystem ferner einen Temperatursensor (21) umfasst, der angepasst ist, um den thermischen Parameter zu messen, wobei der thermische Parameter der Temperatur (T_{M}) der ersten Luftströmung in der ersten Leitung (12) am Ausgang des Wärmetauschers (14) entspricht, und
das Ventil (15) des Regelungssystems derart an die zweite Leitung (13) gekoppelt ist, dass die Änderung der Strömungsmenge der zweiten Luftströmung bewirkt wird, um die Temperatur (T_{M}) der ersten Luftströmung in der ersten Leitung (12) am Ausgang des Wärmetauschers (14) zu regeln.

9. Turbomaschine (1) nach einem der Ansprüche 6 bis 8, wobei die Wärmeaustausch-Baugruppe umfasst:
- mindestens eine Leitung (12, 13) zur Entnahme des Fluids, wobei das Fluid Luft umfasst, die stromabwärts eines Gebläses (2) der Turbomaschine (1) und/oder stromabwärts einer Verdichtungsstufe (5) der Turbomaschine entnommen wird, und
- einen Turbinenring, der eine äußere Oberfläche aufweist, die dazu geeignet ist, derart durch die entnommene Luft belüftet zu werden, dass die Temperatur des Rings geändert wird,
wobei das Ventil (15) derart gestaltet ist, dass die Änderung der entnommenen Luftströmungsmenge bewirkt wird, um einen Satz von Schaufelspitzen der Turbine durch eine Regelung des thermischen Parameters zu lenken, der im Dehnungszustand des Turbinenrings besteht.

10. Verfahren zur Regelung eines thermischen Parameters (T_{M}), der mit einer Wärmeaustausch-Baugruppe (10) einer Turbomaschine (1) verbunden ist, wobei das Verfahren dazu bestimmt ist, in einem Regelungssystem durchgeführt zu werden, das mindestens ein Mittel (21) zur Messung oder Schätzung des thermischen Parameters (T_{M}) und ein Ventil (15) umfasst, das durch ein zumindest teilweise elektrisches Steuersystem (35) gesteuert wird, wobei das Ventil (15) einen Verschluss umfasst, der dazu ausgestaltet ist, die Veränderung der Durchströmungsmenge eines Fluids in der Wärmeaustausch-Baugruppe (10) zu bewirken, um den thermischen Parameter (T_{M}) zu beeinflussen, wobei das Verfahren umfasst:
- einen Schritt des Vergleichens, in dem das positive oder negative Vorzeichen eines Fehlersignals (ε) in Bezug auf die Differenz (ε) zwischen einem durch das Mittel (21) zur Messung oder zur Schätzung gemessenen oder geschätzten Wert des thermischen Parameters (T_{M}) und einem Einstellwert (T_{C}) bestimmt wird,
**dadurch gekennzeichnet, dass** das Verfahren umfasst:
- einen Schritt des Schaltens des Steuerstroms, in welchem dem Steuersystem (35) des Ventils (15) in Abhängigkeit von dem positiven oder negativen Vorzeichen des Fehlersignals (ε) ein Höchststeuerstrom (Max) oder ein Mindeststeuerstrom (Min) geliefert wird, wobei der Höchststeuerstrom (Max) das Schalten des Verschlusses des Ventils (15) in eine erste Position ermöglicht, die einen vollständig geschlossenen Zustand des Ventils (15) definiert, und der Mindeststeuerstrom (Min) das Schalten des Verschlusses des Ventils (15) in eine zweite Position ermöglicht, die einen vollständig geöffneten Zustand des Ventils (15) definiert, und
- einen Schritt des Phasenverschiebens, in dem auf das Fehlersignal (ε) eine Phasenvoreilung angewandt wird, die in Abhängigkeit von einer Schätzung einer Zeitkonstanten (τ) des Steuersystems (35) des Ventils bestimmt wird, wobei der Schritt des Phasenverschiebens dem Schritt des Vergleichens vorangeht.

11. Verfahren nach Anspruch 10, wobei der Schritt des Phasenverschiebens einen Teilschritt des Ableitens (26) umfasst, in dem eine zeitliche Ableitung des Fehlersignals (ε) berechnet wird, wobei die auf das Fehlersignal (ε) an einem gegebenen Zeitpunkt angewandte Phasenvoreilung durch Multiplizieren der Zeitkonstanten (τ) mit der zeitlichen Ableitung an diesem Zeitpunkt berechnet wird.

12. Verfahren nach einem der Ansprüche 10 oder 11, wobei der Schritt des Phasenverschiebens einen Teilschritt des Verstärkens umfasst, in dem auf die Zeitkonstante (τ) des Steuersystems (35) des Ventils (15) eine Regelungsverstärkung (G) angewandt wird, die positiv und kleiner oder gleich eins ist.

## Claims

1. A system for regulating a thermal parameter (T_{M}) associated with a heat exchange assembly (10) of a turbomachine (1), comprising:
- at least one means (21) for measuring or estimating said thermal parameter (T_{M}),
- a valve (15) controlled by an at least partly electric control system (35), the valve (15) including a shutter, formed for example by at least one flap, said shutter being configured to vary the flow rate of passage of a fluid in said heat exchange assembly (10) in order to affect said thermal parameter (T_{M}), and
- a regulator (22) comprising a comparator (32) configured to determine the positive or negative sign of an error signal (ε) relating to the difference (ε) between a value of the thermal parameter (T_{M}) measured or estimated by said means (21) and a setpoint (T_{C}),
**characterized in that** the regulator (22) further comprises:
- a switch (33) coupled to the output of the comparator (32) and configured to deliver to the valve (15) control system (35) a maximum control current (Max) or a minimum control current (Min) based on the positive or negative sign of the error signal (ε), the maximum control current (Max) making it possible to switch the shutter of said valve (15) in a first position defining a fully closed state of the valve (15) and the minimum control current (Min) making it possible to switch the shutter of said valve (15) in a second position defining a fully open state of the valve (15), and
- a phase-shifter (24) configured to apply on the error signal (ε) a phase advance determined from an estimate of a time constant (τ) of the valve (15) control system (35).

2. The regulation system according to claim 1, wherein the phase-shifter (24) comprises a diverter (26) configured to provide a time derivative of the error signal (ε), the phase lead applied on the error signal (ε) at a given instant being calculated by multiplying the time constant (τ) by the time derivative at this instant.

3. The regulation system according to any of claims 1 or 2, wherein the phase-shifter (24) comprises an amplifier (28) configured to apply to the time constant (τ) of said valve (15) control system (35) a positive adjustment gain (G) less than or equal to one.

4. The regulation system according to claim 3, wherein the adjustment gain (G) is comprised between 0.4 and 0.6.

5. The regulation system according to any of claims 1 to 4, wherein the valve (15) control system (35) comprises a valve member actuated by an electric motor, as well as pneumatic control means controlled by the valve member and able to actuate the opening and closing of the valve (15).

6. A turbomachine (1) of an aircraft, **characterized in that** it comprises a system for regulating a thermal parameter (T_{M}) according to any of claims 1 to 5.

7. The turbomachine (1) according to claim 6, wherein the fluid supplying said heat exchange assembly (10) of said regulation system is air led downstream of a fan (2) of the turbomachine (1) and is intended to cool the heat exchange assembly (10).

8. The turbomachine (1) according to claim 7, wherein the heat exchange assembly (10) of said regulation system includes:
- a first duct (12) bleeding a first pressurized air stream downstream of a compression stage (5) of the turbomachine,
- a second duct (13) bleeding a second air stream formed by said air bled downstream of the fan (2), the temperature of the second bled air stream being lower than the temperature of the first bled air stream,
- a heat exchanger (14) to which said first and second ducts (12, 13) are connected, said heat exchanger (14) being able to lower the temperature of the first air stream at the outlet of the exchanger by heat exchange with the second air stream,
the regulation system further comprising a temperature sensor (21) adapted to measure said thermal parameter, the thermal parameter corresponding to the temperature (T_{M}) of the first air stream in the first duct (12) at the outlet of the heat exchanger (14), and
said valve (15) of said regulation system being coupled to the second duct (13) so as to vary the flow rate of the second air stream in order to regulate said temperature (T_{M}) of the first air stream in the first duct (12) at the outlet of the heat exchanger (14).

9. The turbomachine (1) according to any of claims 6 to 8, wherein the heat exchange assembly comprises:
- at least one duct (12) for bleeding said fluid, the fluid including air bled downstream of a fan (2) of the turbomachine (1) and/or downstream of a compression stage (5) of the turbomachine, and
- a turbine ring having an outer surface able to be ventilated by said bled air so as to modify the temperature of said ring,
said valve (15) being arranged so as to vary the bled air flow rate, in order to control a clearance of turbine blade tips by a regulation of the thermal parameter consisting of the state of expansion of the turbine ring.

10. A method for regulating a thermal parameter (T_{M}) associated with a heat exchange assembly (10) of a turbomachine (1), the method being intended to be implemented in a regulation system which comprises at least one means for measuring (21) or estimating said thermal parameter (T_{M}), a valve (15) controlled by an at least partly electric control system (35), the valve (15) including a shutter configured to vary the flow rate of passage of a fluid in said heat exchange assembly (10) in order to affect said thermal parameter (T_{M}),
the method comprising:
- a comparison step in which the positive or negative sign of an error signal (ε) relating to the difference (ε) between a value of the thermal parameter (T_{M}) measured or estimated by said measurement and estimation means (21) and a setpoint (T_{C}) is determined,
- a control current switching step in which a maximum control current (Max) or a minimum control current (Min) is delivered to the valve (15) control system (35) based on the positive or negative sign of the error signal (ε), the maximum control current (Max) making it possible to switch the shutter of said valve (15) in a first position defining a fully closed state of the valve (15) and the minimum control current (Min) making it possible to switch the shutter of said valve (15) in a second position defining a fully open state of the valve (15), and
- a phase-shifting step in which a phase advance determined from an estimate of a time constant (τ) of the valve control system (35) is applied on the error signal (ε), the phase-shifting step preceding the comparison step.

11. The method according to claim 10, wherein the phase-shifting step comprises a derivation sub-step (26) in which a time derivative of the error signal (ε) is calculated, the phase lead applied on the error signal (ε) at a given instant being calculated by multiplying the time constant (τ) by said time derivative at this instant.

12. The method according to any of claims 10 or 11, wherein the phase-shifting step comprises an amplification sub-step in which a positive adjustment gain (G) less than or equal to one is applied to the time constant (τ) of said valve (15) control system (35).
